# FASCICULE DE BREVET EUROPEEN

(11) **EP 3 456 564 B1**
(45) Date de publication et mention de la délivrance du brevet: **29.07.2020**
(21) Numéro de dépôt: 18192286.5
(22) Date de dépôt: 03.09.2018
(51) Int. Cl.: B60H 3/00, B60H 1/00, B60H 1/32, F24F 3/16

(54) **VÉHICULE COMPORTANT UN COMPARTIMENT RÉFRIGÉRÉ ET DÉSINFECTÉ PAR UN GÉNÉRATEUR D'OZONE, ET PROCÉDÉ DE DÉSINFECTION ASSOCIÉ**
FAHRZEUG, DAS EIN MIT EINEM OZONGENERATOR DESINFIZIERTES KÜHLABTEIL UMFASST, UND ENTSPRECHENDES DESINFEKTIONSVERFAHREN
VEHICLE HAVING A COMPARTMENT REFRIGERATED AND DISINFECTED BY AN OZONE GENERATOR, AND ASSOCIATED METHOD OF DISINFECTION

(30) Priorité: 14.09.2017 FR 1758520
(43) Date de publication de la demande: 20.03.2019
(73) Titulaire: Gruau Laval, 53940 Saint-Berthevin (FR)
(72) Inventeur: David, BOSCHER, 35130 LA GUERCHE DE BRETAGNE (FR)
(74) Mandataire: Vidon Brevets & Stratégie

(56) Documents cités:
- WO-A1-2005/115779
- FR-A1- 2 944 998
- JP-A- H08 258 562
- US-A1- 2011 302 942

## Description

### 1. Domaine de l'invention

L'invention concerne un véhicule destiné au transport de denrées alimentaires ou périssables comportant au moins un compartiment réfrigéré par un groupe froid. L'invention concerne plus particulièrement le fait que ce véhicule comporte en outre un générateur qui insuffle de l'ozone à l'intérieur dudit compartiment, à un moment différent de celui de la mise en marche du groupe froid.

### 2. Art antérieur

De nombreux véhicules utilitaires permettent le transport de marchandises. Ces véhicules comportent une cabine pour le pilotage et un volume de chargement. Dans le cas du transport de denrées alimentaires périssables ou de produits frais, on utilise généralement des véhicules frigorifiques qui sont dotés d'un compartiment réfrigéré. Si les marchandises doivent être transportées à des températures différentes, comme c'est le cas par exemple pour des fruits et légumes, et pour de la viande congelée, alors le véhicule dispose de plusieurs compartiments réfrigérés. Ces compartiments réfrigérés peuvent alors disposer de leurs propres groupes froids. Le conducteur règle la température à l'aide d'une interface utilisateur généralement disposée dans la cabine, la consigne est transmise à une unité de contrôle embarquée dans le véhicule qui commande le groupe froid et, en fonction de la mesure prise par un thermomètre dans le compartiment, régule la température à l'intérieur.

Entre deux livraisons, le compartiment réfrigéré est vidé et nettoyé. Lors du nettoyage par le personnel, le compartiment est ouvert et monte en température de sorte qu'il est nécessaire de le reconditionner avant la nouvelle utilisation. Le groupe froid est donc mis en marche un certain temps avant le chargement en fonction de la température correspondant à la livraison à effectuer. L'unité de contrôle est donc programmée de façon qu'à une certaine heure le groupe froid soit mis en marche.

Il est nécessaire bien souvent de désinfecter le compartiment. Le personnel de nettoyage peut le faire avec des outils manuels et des produits de désinfection, mais cette intervention est longue et coûteuse. La désinfection à l'ozone donne des résultats plus efficaces. Il est apparu récemment des générateurs d'ozone suffisamment robustes pour être embarqués dans des véhicules. Un générateur d'ozone est un dispositif électrique qui capte de l'air de l'intérieur ou de l'extérieur, le sèche puis le soumet à des décharges électriques qui ionisent les molécules d'oxygène (O₂) et les recombinent en molécules d'ozone (O₃). L'ozone est insufflé dans le compartiment le temps nécessaire à sa désinfection. Grâce au très fort pouvoir d'oxydation, l'ozone détruit les micro-organismes et les bactéries. Le générateur d'ozone est mis en marche en dehors de toute présence humaine dans le compartiment, comme c'est un gaz instable il disparaît ensuite naturellement par un simple effet mécanique.

Le générateur d'ozone et le groupe froid sont fabriqués par des entreprises qui ne sont pas celles équipant les véhicules, ces appareils sont donc installés comme dispositifs indépendants qui possèdent leur propre interface de commande. L'opérateur programme séparément les deux appareils, ce qui est fastidieux et peut entrainer des erreurs, par exemple le groupe froid et le générateur d'ozone ne doivent pas fonctionner ensembles, en effet un fonctionnement concomitant dégrade les performances frigorifiques du système. De plus, le fonctionnement de ces appareils est souvent conditionné par des capteurs destinés à vérifier que les conditions de sécurité sont bien respectées, ces capteurs sont multipliés lorsque les dispositifs sont indépendants, ce qui augmente le coût et le temps d'installation. Il existe donc un réel besoin d'un véhicule permettant à un opérateur de commander facilement les dispositifs embarqués et de mieux centraliser le contrôle de ces dispositifs. Ce véhicule doit également respecter les critères de régulation des conditions liées à la bonne conservation des denrées alimentaire (température, hygrométrie, ...).

Le document D1 - US 2011/302942 déposé par BIRCHARD décrit un camion contenant un conteneur équipé d'un générateur d'ozone. Le camion dispose d'une unité de contrôle fixée extérieurement à la paroi avant du conteneur, qui régule des paramètres d'environnement du volume à l'intérieur du conteneur. Le véhicule est doté d'un ventilateur qui dirige l'air vers un condenseur, des capteurs mesure la température de l'air et transmettent les données à l'unité de commande. L'unité de contrôle régule le taux d'ozone en utilisant les valeurs fournie par un capteur situé à la sortie d'air présente dans le conteneur.

### 3. Objectifs de l'invention

La présente invention propose un véhicule comportant un compartiment réfrigéré, d'un générateur d'ozone et d'au moins un groupe froid, ce véhicule possède un moyen de contrôle qui commande la mise en marche de ces deux dispositifs au moins, qui reçoit de manière centralisée les consignes et paramètres de fonctionnement et qui gère efficacement le séquencement des opérations lors d'un cycle de conditionnement du compartiment.

### 4. Exposé de l'invention

A cet effet, l'invention concerne un véhicule comportant au moins un compartiment réfrigéré doté d'au moins un échangeur de chaleur thermiquement relié à un groupe froid, et une interface utilisateur transmettant une commande d'activation à une unité de contrôle pour mettre en marche ledit groupe froid à un moment déterminé. Le véhicule comporte en outre un générateur pour insuffler de l'ozone à l'intérieur dudit compartiment, l'introduction de la commande d'activation déclenche également le fonctionnement du générateur à un moment différent de celui du groupe froid, et un moyen de dégivrage de l'échangeur de chaleur dont le fonctionnement est également commandé par l'unité de contrôle, consécutivement à l'introduction d'une commande d'activation, l'unité de contrôle mettant en marche d'abord ledit moyen de dégivrage, puis le générateur d'ozone et enfin le groupe froid.

De cette manière, les commandes appliquées aux différents équipements du véhicule sont synchronisées, l'unité de contrôle commande également le moyen de dégivrage évitant à un opérateur d'effectuer cette programmation, et en le mettant en marche au début du cycle de conditionnement.

Selon une variante de réalisation, l'unité de contrôle fait fonctionner pendant une durée déterminée le ventilateur après le fonctionnement du générateur d'ozone et avant le fonctionnement du groupe froid. De cette manière, le compartiment est d'abord désinfecté et ensuite, il est mis à la température d'utilisation.

Selon un premier mode de réalisation, le véhicule comporte un ventilateur dans le compartiment et dont le fonctionnement est également commandé par l'unité de contrôle, ledit ventilateur fonctionnant au moins en même temps que le générateur d'ozone et que le groupe froid. De cette manière, l'unité de contrôle commande également le ventilateur évitant à un opérateur d'effectuer cette programmation, le ventilateur est mis en marche en même temps que le groupe froid ou en même temps que le générateur d'ozone.

Selon un autre mode de réalisation, l'unité de contrôle met en marche pendant une durée déterminée le ventilateur après le fonctionnement du générateur d'ozone et avant le fonctionnement du groupe froid. De cette manière, l'ozone produite précédemment peut être supprimée par effet mécanique, permettant ainsi à des opérateurs de pénétrer plus rapidement dans le compartiment.

Selon un autre mode de réalisation, le véhicule comporte un moyen de vérification des conditions de sécurité telles que : véhicule à l'arrêt, branchement au secteur électrique, porte du compartiment fermée, absence de personne dans le compartiment, l'unité de contrôle déclenchant le fonctionnement du générateur d'ozone après la réception de la commande d'activation et après avoir vérifié que les conditions de sécurité sont bien respectées. De cette manière, l'unité de contrôle ne lance la génération d'ozone que si toutes les conditions de sécurité prévues sur ce véhicule sont respectées.

Selon un autre mode de réalisation, l'unité de contrôle stoppe le fonctionnement du générateur d'ozone lorsque les conditions de sécurité ne sont pas respectées. De cette manière, l'unité de contrôle stoppe la génération d'ozone dès qu'il y a un risque d'exposition à ce gaz pour des personnes.

Selon un autre mode de réalisation, le véhicule comporte un moyen de communication avec un serveur distant, l'unité de contrôle émettant via le moyen de communication un identifiant du véhicule et une donnée indiquant que le générateur d'ozone fonctionne dans le véhicule identifié. De cette manière, un serveur au sol est informé en temps réel de l'avancement des cycles de conditionnement de chaque véhicule.

Selon un autre mode de réalisation, le véhicule comporte un moyen de communication avec un serveur distant, l'unité de contrôle recevant via le moyen de communication les paramètres définissant au moins les durées de fonctionnement du groupe froid et du générateur d'ozone. De cette manière, un serveur au sol peut programmer à distance les paramètres définissant le cycle de conditionnement de chaque véhicule géré par ce serveur.

Selon un autre mode de réalisation, l'unité de contrôle comporte un tableau associant des marchandises à embarquer dans le compartiment réfrigéré et la durée de mise en marche du générateur d'ozone, l'interface utilisateur permettant de sélectionner une marchandise parmi plusieurs, l'unité de contrôle sélectionnant la durée de fonctionnement du générateur d'ozone en fonction de la marchandise sélectionnée. De cette manière, l'unité de contrôle sélectionne elle-même les paramètres optimaux du cycle de conditionnement en fonction de la marchandise que ce véhicule transporte.

Selon un autre mode de réalisation, le véhicule comporte un moyen de vérification des conditions de sécurité telles que : véhicule à l'arrêt et ouvrant de la porte du véhicule fermé, l'unité de contrôle déclenchant le fonctionnement du générateur d'ozone après la réception de la commande d'activation et après avoir vérifié que les dites conditions de sécurité sont bien respectées. De cette manière, l'unité de contrôle ne lance la génération d'ozone que si toutes les conditions de sécurité prévues sur ce véhicule sont respectées.

Selon un autre aspect, l'invention concerne un procédé de traitement d'un compartiment réfrigéré embarqué dans un véhicule et doté d'un échangeur de chaleur thermiquement relié à un groupe froid, ledit véhicule comportant une interface utilisateur destiné à recevoir une commande d'activation et à la transmettre à une unité de contrôle pour faire fonctionner ledit groupe froid. Ledit procédé comporte une étape de réception de la commande d'activation déclenchant d'abord une étape de fonctionnement pendant une première durée déterminée d'un générateur d'ozone embarqué dans ledit véhicule et ensuite une étape de fonctionnement du groupe froid pendant une seconde durée déterminée, ledit véhicule comportant en outre un moyen de dégivrage de l'échangeur de chaleur dont le fonctionnement est également commandé par l'unité de contrôle, consécutivement à l'introduction d'une commande d'activation, l'unité de contrôle mettant en marche d'abord ledit moyen de dégivrage, puis le générateur d'ozone et enfin le groupe froid.

Selon un autre mode de réalisation, ledit procédé comporte une étape intermédiaire d'une troisième durée déterminée intervenant entre les étapes de fonctionnement du générateur d'ozone et de fonctionnement du groupe froid. Le ventilateur est en marche et le générateur d'ozone ainsi que le groupe froid est à l'arrêt pendant cette étape intermédiaire.

### 5. Liste des figures

D'autres caractéristiques et avantages de l'invention apparaîtront maintenant avec plus de détails dans le cadre de la description qui suit d'exemples de réalisation donnés à titre illustratif et non-limitatif en se référant aux figures annexées qui représentent :
- la figure 1 présente un schéma d'un véhicule utilitaire vu de profil selon un exemple préféré de réalisation,
- la figure 2 présente l'ensemble des équipements électriques coopérant avec l'unité de contrôle 12, selon un exemple préféré de réalisation,
- la figure 3 présente un exemple d'ordinogramme des principales étapes effectuées lors d'un cycle de conditionnement du compartiment,
- la figure 4 présente un diagramme temporel du fonctionnement et de l'arrêt des dispositifs électriques au cours d'un cycle de conditionnement.

### 6. Description d'un mode de réalisation de l'invention

### 6.1 Principe général

L'invention concerne un véhicule comportant au moins un compartiment réfrigéré doté d'un échangeur de chaleur thermiquement relié à un groupe froid, et une interface utilisateur transmettant une commande d'activation à une unité de contrôle pour mettre en marche ledit groupe froid à un moment déterminé. Le véhicule comporte en outre un générateur pour insuffler de l'ozone à l'intérieur dudit compartiment, l'introduction de la commande d'activation déclenche également le fonctionnement dudit générateur à un moment différent de celui du groupe froid. De cette manière, les commandes appliquées aux différents équipements du véhicule sont synchronisées. Selon une variante de réalisation, l'unité de contrôle fait fonctionner pendant une durée déterminée le ventilateur après le fonctionnement du générateur d'ozone et avant le fonctionnement du groupe froid. De cette manière, le compartiment est d'abord désinfecté et ensuite il est mis à la température d'utilisation.

### 6.2 Description d'un mode de réalisation

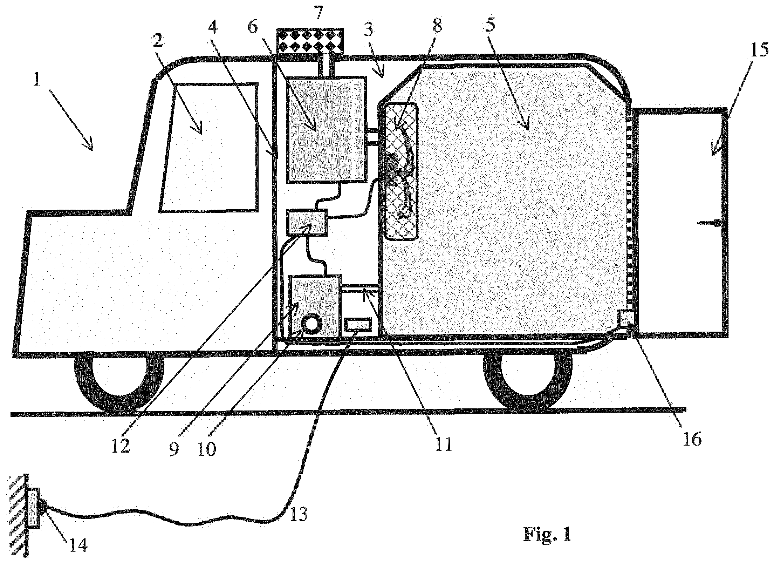

La **FIG.1** illustre un schéma d'un véhicule utilitaire 1 vu sur le coté destiné à effectuer des livraisons de denrées périssables, selon un exemple préféré de réalisation. Un véhicule utilitaire désigne un fourgon, une camionnette, un camion ou tout véhicule sur roues transportant des marchandises. De façon générale, le véhicule comporte une cabine 2 et un volume de chargement 3 destiné à recevoir des colis, ce volume étant de forme parallélépipédique par exemple. La cabine 2 et le volume de chargement 3 sont séparés par une paroi 4. Les colis peuvent être des denrées alimentaires pour lesquels la chaîne du froid doit être respectée. De ce fait, le véhicule utilitaire est équipé d'au moins un compartiment 5 isolé thermiquement.

Pour maintenir à basse température l'intérieur du compartiment 5, le véhicule est équipé d'un groupe froid 6 comprenant notamment un circuit de refroidissement d'un liquide caloporteur passant à travers des échangeurs. Les calories sont évacuées à l'extérieur à l'aide d'un échangeur 7 monté généralement sur le toit du véhicule. Un autre échangeur se situe à l'intérieur du compartiment 5 pour capter les calories. Le groupe froid comporte un moyen de dégivrage de façon à éliminer le givre se formant sur les éléments produisant du froid. Ce moyen de dégivrage est de préférence une résistance électrique, ou une soufflerie électrique produisant un flux d'air chaud, il peut aussi être réalisé par une inversion du cycle de production du froid, ce qui a pour effet de produire de la chaleur là où auparavant le froid était généré. Au moins un ventilateur 8 est placé à l'intérieur du compartiment pour réaliser un brassage de l'air et ainsi assurer une température homogène dans le compartiment.

Selon un aspect important de l'invention, le véhicule est doté d'un générateur d'ozone 9 qui est insufflé à l'intérieur du compartiment afin de le désinfecter. Les denrées alimentaires sont porteuses de micro-organismes qui, en cas de prolifération, peuvent être nocifs pour les consommateurs. Grace à son potentiel très élevé d'oxydation, l'ozone oxyde la paroi des cellules bactériennes, et en les perçant contribue à leurs destructions. L'exposition à l'ozone d'un local pendant une durée déterminée permet donc de le désinfecter. La durée dépend du volume du compartiment, mais aussi du niveau d'impuretés qu'il présente. Le générateur utilisé dans le prototype qui a permis de tester la présente invention, possède un débit de 7 litres par minute. Compte tenu du fait que de tels compartiments possèdent généralement un volume allant de 1 m³ à 20 m³, le générateur est mis en marche pendant 30 minutes au maximum en vue d'une désinfection correcte. Ce temps est bien sûr purement indicatif et ne doit être pris que comme un exemple. Selon un mode préféré de réalisation, le générateur d'ozone extrait de l'air à l'extérieur du véhicule à l'aide d'une prise d'air 10, transforme les molécules d'oxygène (O2) en ozone (O3), et insuffle par une buse 11 l'air enrichi en ozone à l'intérieur du compartiment 5. Une bouche de sortie d'air est éventuellement aménagée dans la paroi du compartiment 5 pour ne pas créer de surpression à l'intérieur.

Les différents dispositifs électriques sont contrôlés par un système embarqué 12, appelé par la suite « unité de contrôle ». Cette unité de contrôle 12 peut être mise en œuvre par un boitier unique, ou par une pluralité de boitiers constituant des sous-systèmes et communiquant entre eux de façon à synchroniser les commandes adressées aux différents dispositifs. L'unité de contrôle est alimentée par la batterie du véhicule de façon à être constamment opérationnelle, même quand le véhicule roule. Selon un mode particulier de réalisation, les dispositifs électriques du véhicule tels que : le groupe froid, le générateur d'ozone, le ventilateur, sont alimentés par le secteur électrique de l'endroit où est garé le véhicule. L'alimentation s'effectue à l'aide d'un câble électrique 13 dont l'extrémité se termine par une fiche 14 qui vient se brancher dans une prise du secteur. De cette manière, la batterie du véhicule n'est pas sollicitée et ne risque pas d'être complètement déchargée, de plus la durée de fonctionnement de ces dispositifs n'est pas tributaire de l'autonomie électrique du véhicule.

Le compartiment réfrigéré est accessible par une porte 15 débouchant généralement vers l'arrière du véhicule. Cette porte 15 permet à un opérateur de s'introduire dans le compartiment 5 et d'y entreposer des marchandises. Cette porte est dotée d'un détecteur 16 afin de fournir à l'unité de contrôle 12 une information sur son état d'ouverture et de fermeture. L'ozone étant néfaste pour les opérateurs, si quelqu'un pénètre dans le compartiment alors que le générateur d'ozone fonctionne, l'unité de contrôle 12 le détecte à l'aide du signal électrique émis lorsque la porte 15 s'ouvre et, arrête aussitôt la génération d'ozone. Selon un perfectionnement, lorsque le générateur d'ozone fonctionne, un signal lumineux apparaît à l'extérieur du véhicule pour informer de cette situation. Tout type de moyen de détection de présence humaine peut être utilisé parmi lesquels on peut citer : détecteur d'ouverture de porte, détection par infra-rouge, détection par ultrason, caméra, ....

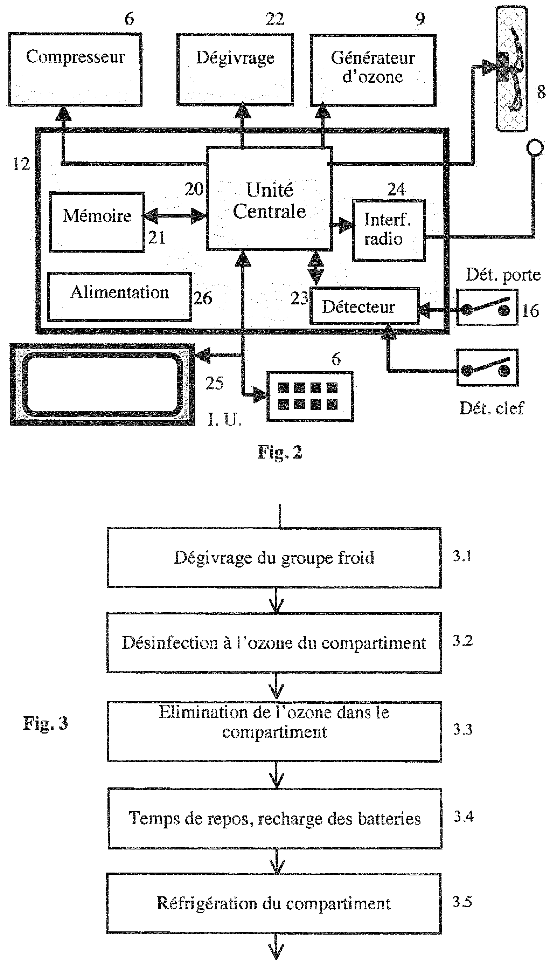

La **FIG.2** présente l'ensemble des équipements électriques coopérant avec l'unité de contrôle 12 selon un exemple préféré de réalisation. Selon cette figure, l'unité de contrôle 12 se présente sous la forme d'un boitier électronique comportant une Unité Centrale 20 exécutant un programme enregistré dans une mémoire 21. L'unité de contrôle dispose de ports de sortie pour commander le compresseur du groupe froid 6, ainsi que le moyen de dégivrage 22, le ventilateur 8 et le générateur d'ozone 9. L'unité de contrôle dispose également de ports d'entrée 23 reliés à des capteurs destinés à vérifier que les conditions de sécurité sont respectées, ces capteurs sont par exemple : un détecteur de fermeture et d'ouverture de la porte 15, un détecteur de présence de la clef de démarrage du véhicule dans le contacteur électrique, un détecteur de présence à l'intérieur du compartiment et un capteur de détection de la présence du secteur électrique. L'unité de contrôle comporte également une interface de communication 24, radio de préférence avec un serveur distant. A travers cette interface, l'unité de contrôle peut recevoir des commandes et des paramètres de fonctionnement et émettre des informations sur son état.

L'unité de contrôle dispose également d'une liaison, filaire de préférence pour communiquer avec une interface utilisateur 25 de type écran/clavier, l'écran pouvant être tactile. Cette interface permet à un utilisateur de lancer par exemple un cycle de conditionnement du compartiment réfrigéré, et de l'informer constamment de la durée de l'avancement des différentes étapes de ce cycle. Une alimentation électrique 26 fournit l'énergie de fonctionnement à l'unité de contrôle 12 et l'interface utilisateur 25. Cette alimentation est avantageusement la batterie du véhicule.

Après avoir détaillé les principaux équipements que comporte le véhicule, nous allons maintenant expliquer comment ceux-ci coopèrent. La **Fig. 3** présente un ordinogramme des étapes successives montrant la mise en fonctionnement et l'arrêt des équipements électriques de façon à effectuer un cycle de conditionnement du compartiment.

Suite à la livraison de marchandises, le compartiment réfrigéré est vide et doit être reconditionné pour une prochaine livraison. Un cycle de conditionnement d'un compartiment réfrigéré comporte de préférence le séquencement des étapes ci-dessous, illustrées sous la forme de l'ordinogramme représenté à la **Fig. 3** :

| | |
|---|---|
| - dégivrage du groupe froid, | étape 3.1 |
| - désinfection à l'ozone du compartiment, | étape 3.2 |
| - élimination de l'ozone, | étape 3.3 |
| - temps de repos avec éventuellement recharge des batteries, | étape 3.4 |
| - réfrigération du compartiment. | étape 3.5 |

Ce cycle commence dès que la livraison est terminée et que le véhicule est à l'arrêt, de préférence dans son garage. Les livraisons étant effectuées généralement le jour, le cycle peut se dérouler au cours de la nuit.

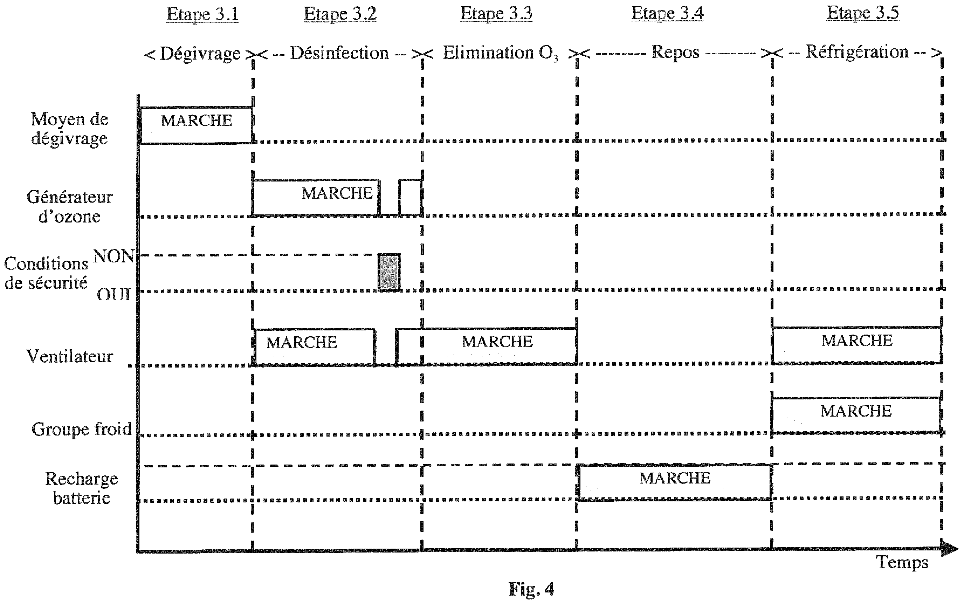

La **Fig. 4** présente un diagramme temporel du fonctionnement et de l'arrêt des dispositifs électriques au cours d'un cycle de conditionnement du compartiment. Selon un exemple préféré de réalisation, le cycle commence lorsque le véhicule est à l'arrêt. Selon un perfectionnement, l'opérateur branche le véhicule sur le secteur à l'aide du câble 13 et de la fiche 14 avant de lancer le cycle de conditionnement en appuyant sur une touche de l'interface utilisateur 25, dans ce mode de réalisation le cycle ne démarre pas tant que le secteur n'est pas branché. Dans un premier temps, l'unité de contrôle 12 vérifie l'état des détecteurs et ne démarre le cycle que si la clef de démarrage est absente du contacteur (appelé également « Neiman » marque déposée de la société du même nom), et si la porte 15 du compartiment est fermée.

Ces vérifications une fois faites, le cycle de conditionnement commence par l'étape 3.1 de dégivrage du groupe froid. Cette étape consiste à éliminer la glace qui s'est formée sur l'échangeur. Le moyen de dégivrage 22 est alors mis en marche pendant une première durée déterminée, une demi-heure par exemple.

Puis, l'étape de désinfection 3.2 est lancée et l'unité de contrôle met en marche à la fois le générateur d'ozone et le ventilateur 8 pendant une seconde durée déterminée, une demi-heure par exemple. L'unité de contrôle 12 vérifie que les conditions de sécurité sont respectées avant de lancer cette étape. Les conditions de sécurité sont par exemple :
- le véhicule est à l'arrêt, la clef n'était pas dans le contacteur,
- le secteur électrique alimente le véhicule via le câble 13,
- la porte du compartiment 5 reste fermée,
- aucune personne ne se trouve dans le compartiment 5.

Au cours de l'étape 3.2, si l'une au moins des conditions n'est plus respectée, alors l'unité de contrôle 12 stoppe aussitôt le générateur d'ozone 9 ainsi que le ventilateur 8. Ces dispositifs sont remis en marche lorsque toutes les conditions sont de nouveau reproduites, et éventuellement à la suite de l'introduction d'une commande de reprise du cycle.

Une fois la seconde durée déterminée écoulée, le compartiment est purifié lors de l'étape d'élimination de l'ozone (étape 3.3) au cours de laquelle le générateur 9 est arrêté et le ventilateur 8 reste en marche. Le fait de brasser de l'air détruit mécaniquement les molécules d'ozone. L'élimination de l'ozone intervient pendant une troisième durée déterminée, 1,5 heures par exemple, ce qui est suffisant pour permettre à un opérateur de pénétrer sans danger dans le compartiment.

Une étape de repos 3.4 intervient pendant une quatrième durée déterminée, de quelques heures généralement, au cours de laquelle aucun dispositif électrique (à l'exception de l'unité de contrôle) ne fonctionne. De façon optionnelle, cette étape est mise à profit pour recharger les batteries du véhicule, en utilisant l'énergie fournie par le câble 13 branché sur le secteur. Si le temps de repos n'est pas suffisant pour recharger les batteries, alors la recharge peut aussi s'effectuer pendant les étapes précédentes et suivantes du cycle de conditionnement.

Le cycle de conditionnement se termine lors de l'étape de réfrigération 3.5 qui s'écoule pendant une cinquième durée déterminée. Au cours de cette étape, le compartiment est mis à la température qui correspond à sa prochaine utilisation. Pour cela, le groupe froid est mis en marche et régulée thermiquement et le ventilateur fonctionne pour assurer une température homogène dans tout le compartiment.

A l'issue de ce cycle de conditionnement, le véhicule est prêt à être utilisé.

Selon un perfectionnement, l'unité de contrôle 12 communique avec un serveur distant à travers son interface radio 24, ou tout autre moyen de communication filaire ou sans fil. L'unité de contrôle peut ainsi transmettre l'identifiant du véhicule (son numéro d'immatriculation par exemple) et l'état d'avancement du cycle de conditionnement (par exemple l'étape qui est en cours d'exécution). L'unité de contrôle peut aussi transmettre au serveur une information représentative de l'état des détecteurs et notamment le fait que la porte 15 vient de s'ouvrir, ou qu'un détecteur de présence est activé. De cette façon, l'unité de contrôle assure aussi une fonction de surveillance du véhicule 1.

L'unité de contrôle peut également recevoir des paramètres associés au cycle de conditionnement. En fonction de la prochaine mission qu'un véhicule 1 va réaliser, le serveur distant transmet par exemple : la durée de fonctionnement du générateur d'ozone 9, la durée de repos (afin de recharger de façon optimale la batterie), la température cible lors de l'étape 3.5 de réfrigération. De cette manière, les paramètres du cycle peuvent être adaptés au type de denrées alimentaires qui vont être chargées dans le compartiment, par exemple 5°C pour des fruits et légumes, et -18°C pour de la viande congelée. Avantageusement, au cours du cycle de conditionnement, le serveur peut transmettre une commande visant à en modifier les étapes, par exemple en modifiant la durée de l'étape de repos de façon à rendre plus tôt ou plus tard le véhicule opérationnel.

Bien que la présente invention ait été décrite en référence aux modes de réalisation particuliers illustrés, celle-ci n'est nullement limitée par ces modes de réalisation, mais ne l'est que par les revendications annexées.

## Revendications

1. Véhicule (1) comportant au moins un compartiment réfrigéré (5) doté d'au moins un échangeur de chaleur thermiquement relié à au moins un groupe froid (6), et une interface utilisateur (25) transmettant une commande d'activation à une unité de contrôle (12) pour mettre en marche ledit groupe froid à un moment déterminé,
**caractérisé en ce qu'**il comporte en outre un générateur (9) pour insuffler de l'ozone à l'intérieur dudit compartiment (5), l'introduction de la commande d'activation déclenchant également le fonctionnement dudit générateur (9) à un moment différent de celui du groupe froid (6), et
un moyen de dégivrage (22) de l'échangeur de chaleur dont le fonctionnement est également commandé par l'unité de contrôle (12), consécutivement à l'introduction d'une commande d'activation, l'unité de contrôle mettant en marche d'abord ledit moyen de dégivrage, puis le générateur d'ozone et enfin le groupe froid.

2. Véhicule selon la revendication 1, **caractérisé en ce qu'**il comporte un ventilateur (8) dans le compartiment et dont le fonctionnement est également commandé par l'unité de contrôle, ledit ventilateur fonctionnant au moins en même temps que le générateur d'ozone et que le groupe froid.

3. Véhicule selon la revendication 2, **caractérisé en ce que** l'unité de contrôle (12) met en marche pendant une durée déterminée le ventilateur (8) après le fonctionnement du générateur d'ozone (9) et avant le fonctionnement du groupe froid (6).

4. Véhicule selon l'une quelconque des revendications précédentes, **caractérisé en ce qu'**il comporte un moyen de vérification des conditions de sécurité telles que : véhicule à l'arrêt, branchement au secteur électrique, porte du compartiment fermée, absence de personne dans le compartiment, l'unité de contrôle (12) déclenchant le fonctionnement du générateur d'ozone (9) après la réception de la commande d'activation et après avoir vérifié que les conditions de sécurité sont bien respectées.

5. Véhicule selon la revendication 4, **caractérisé en ce que** l'unité de contrôle (12) stoppe le fonctionnement du générateur d'ozone (9) lorsque les conditions de sécurité ne sont pas respectées.

6. Véhicule selon l'une quelconque des revendications précédentes, **caractérisé en ce qu'**il comporte un moyen de communication (24) avec un serveur distant, l'unité de contrôle (12) émettant via le moyen de communication un identifiant du véhicule et une donnée indiquant que le générateur d'ozone fonctionne dans le véhicule identifié.

7. Véhicule selon l'une quelconque des revendications précédentes, **caractérisé en ce qu'**il comporte un moyen de communication (24) avec un serveur distant, l'unité de contrôle (12) recevant via le moyen de communication les paramètres définissant au moins les durées de fonctionnement du groupe froid et du générateur d'ozone.

8. Véhicule selon l'une quelconque des revendications 1 à 5, **caractérisé en ce que** l'unité de contrôle (12) comporte un tableau associant des marchandises à embarquer dans le compartiment réfrigéré et la durée de mise en marche du générateur d'ozone, l'interface utilisateur (25) permettant de sélectionner une marchandise parmi plusieurs, l'unité de contrôle sélectionnant la durée de fonctionnement du générateur d'ozone en fonction de la marchandise sélectionnée.

9. Procédé de traitement d'un compartiment réfrigéré (5) embarqué dans un véhicule (1) et doté d'un échangeur de chaleur thermiquement relié à un groupe froid (6), ledit véhicule comportant une interface utilisateur destiné à recevoir une commande d'activation et à la transmettre à une unité de contrôle (12) pour faire fonctionner ledit groupe froid, **caractérisé en ce qu'**il comporte une étape de réception de la commande d'activation déclenchant d'abord une étape de fonctionnement (3.2) pendant une première durée déterminée d'un générateur d'ozone (9) embarqué dans ledit véhicule et ensuite une étape de fonctionnement (3.5) du groupe froid pendant une seconde durée déterminée, ledit véhicule comportant en outre un moyen de dégivrage (22) de l'échangeur de chaleur dont le fonctionnement est également commandé par l'unité de contrôle (12), consécutivement à l'introduction d'une commande d'activation, l'unité de contrôle mettant en marche d'abord ledit moyen de dégivrage, puis le générateur d'ozone et enfin le groupe froid.

10. Procédé de traitement d'un compartiment réfrigéré selon la revendication 9, **caractérisé en ce qu'**il comporte une étape intermédiaire (3.3) d'une troisième durée déterminée intervenant entre les étapes de fonctionnement du générateur d'ozone et de fonctionnement du groupe froid, un ventilateur (8) placé dans le compartiment étant en marche et le générateur d'ozone ainsi que le groupe froid étant à l'arrêt pendant ladite étape intermédiaire.

## Patentansprüche

1. Fahrzeug (1), das wenigstens einen gekühlten Raum (5), der mit wenigstens einem Wärmetauscher versehen ist, der mit wenigstens einer Kältegruppe (6) thermisch verbunden ist, und eine Anwenderschnittstelle (25), die einen Aktivierungsbefehl an eine Steuereinheit (12) überträgt, um die Kältegruppe zu einem bestimmten Zeitpunkt einzuschalten, umfasst,
**dadurch gekennzeichnet, dass** es außerdem Folgendes umfasst: einen Generator (9), um in das Innere des Raums (5) Ozon zu blasen, wobei die Eingabe des Aktivierungsbefehls auch den Betrieb des Generators (9) zu einem Zeitpunkt, der von jenem der Kältegruppe (6) verschieden ist, auslöst, und
ein Entfrostungsmittel (22) des Wärmetauschers, dessen Betrieb ebenfalls durch die Steuereinheit (12) nach der Eingabe des Aktivierungsbefehls befohlen wird, wobei die Steuereinheit zunächst das Entfrostungsmittel, dann den Ozongenerator und schließlich die Kältegruppe einschaltet.

2. Fahrzeug nach Anspruch 1, **dadurch gekennzeichnet, dass** es ein Gebläse (8) in dem Raum umfasst, dessen Betrieb ebenfalls durch die Steuereinheit befohlen wird, wobei das Gebläse zumindest zur gleichen Zeit wie der Ozongenerator und die Kältegruppe arbeitet.

3. Fahrzeug nach Anspruch 2, **dadurch gekennzeichnet, dass** die Steuereinheit (12) das Gebläse (8) während einer bestimmten Dauer nach dem Betrieb des Ozongenerators (9) und vor dem Betrieb der Kältegruppe (6) einschaltet.

4. Fahrzeug nach einem der vorhergehenden Ansprüche, **dadurch gekennzeichnet, dass** es ein Mittel für die Verifikation von Sicherheitsbedingungen wie etwa: Halt des Fahrzeugs, Anschluss an das elektrische Versorgungsnetz, Tür des Raums geschlossen, keine Person im Raum, umfasst, wobei die Steuereinheit (12) den Betrieb des Ozongenerators (9) nach dem Empfang des Aktivierungsbefehls und nach der Verifizierung, dass die Sicherheitsbedingungen erfüllt sind, auslöst.

5. Fahrzeug nach Anspruch 4, **dadurch gekennzeichnet, dass** die Steuereinheit (12) den Betrieb des Ozongenerators (9) anhält, wenn die Sicherheitsbedingungen nicht erfüllt sind.

6. Fahrzeug nach einem der vorhergehenden Ansprüche, **dadurch gekennzeichnet, dass** es ein Mittel (24) für die Kommunikation mit einem entfernten Server umfasst, wobei die Steuereinheit (12) über das Kommunikationsmittel eine Kennung des Fahrzeugs und Daten, die angeben, dass der Ozongenerator in dem identifizierten Fahrzeug in Betrieb ist, sendet.

7. Fahrzeug nach einem der vorhergehenden Ansprüche, **dadurch gekennzeichnet, dass** es ein Mittel (24) für die Kommunikation mit einem entfernten Server umfasst, wobei die Steuereinheit (12) über das Kommunikationsmittel die Parameter empfängt, die wenigstens die Betriebsdauern der Kältegruppe und des Ozongenerators definieren.

8. Fahrzeug nach einem der Ansprüche 1 bis 5, **dadurch gekennzeichnet, dass** die Steuereinheit (12) eine Tabelle enthält, die Waren, die in dem gekühlten Raum untergebracht werden sollen, und die Dauer des Betriebs des Ozongenerators einander zuordnet, wobei die Anwenderschnittstelle (25) erlaubt, eine von mehreren Waren auszuwählen, wobei die Steuereinheit die Betriebsdauer des Ozongenerators als Funktion der ausgewählten Ware auswählt.

9. Verfahren zum Behandeln eines gekühlten Raums (5), der in einem Fahrzeug (1) aufgenommen ist und mit einem Wärmetauscher versehen ist, der mit einer Kältegruppe (6) thermisch verbunden ist, wobei das Fahrzeug eine Anwenderschnittstelle umfasst, die dazu bestimmt ist, einen Aktivierungsbefehl zu empfangen und ihn an eine Steuereinheit (12) zu übertragen, um die Kältegruppe zu betreiben, **dadurch gekennzeichnet, dass** es einen Schritt des Empfangens des Aktivierungsbefehls umfasst, der zunächst einen Schritt (3.2) des Betreibens eines in dem Fahrzeug installierten Ozongenerators (9) während einer ersten bestimmten Dauer und anschließend einen Schritt (3.5) des Betreibens der Kältegruppe während einer zweiten bestimmten Dauer auslöst, wobei das Fahrzeug außerdem ein Entfrostungsmittel (22) des Wärmetauschers umfasst, dessen Betrieb ebenfalls durch die Steuereinheit (12) nach der Eingabe eines Aktivierungsbefehls befohlen wird, wobei die Steuereinheit zunächst das Entfrostungsmittel, dann den Ozongenerator und schließlich die Kältegruppe einschaltet.

10. Verfahren zum Behandeln eines gekühlten Raums nach Anspruch 9, **dadurch gekennzeichnet, dass** es einen Zwischenschritt (3.3) mit einer dritten bestimmten Dauer umfasst, die zwischen den Schritten des Betreibens des Ozongenerators und des Betreibens der Kältegruppe liegt, wobei in diesem Zwischenschritt ein in dem Raum angeordnetes Gebläse (8) in Betrieb ist und der Ozongenerator sowie die Kältegruppe nicht in Betrieb sind.

## Claims

1. Vehicle (1) having at least one refrigerated compartment (5) provided with at least one heat exchanger thermally connected to at least one cooling unit (6), and a user interface (25) transmitting an activation command to a control unit (12) to start said cooling unit at a particular moment,
**characterised in that** it further comprises a generator (9) for injecting ozone into the inside of said compartment (5), the introduction of the activation command also triggering the operation of said generator (9) at a different moment from that of the cooling unit (6), and
a means for defrosting (22) the heat exchanger the operation of which is also controlled by the control unit (12), following the introduction of an activation command, the control unit first starting said defrosting means, then the ozone generator and finally the cooling unit.

2. Vehicle according to claim 1, **characterised in that** it comprises a fan (8) in the compartment and the operation of which is also controlled by the control unit, said fan operating at least at the same time as the ozone generator and the cooling unit.

3. Vehicle according to claim 2, **characterised in that** the control unit (12) starts the fan (8) for a particular duration after the operation of the ozone generator (9) and before the operation of the cooling unit (6).

4. Vehicle according to any one of the preceding claims, **characterised in that** it comprises a means for checking safety conditions such as: vehicle at a standstill, connected to electrical system, compartment door closed, no persons in the compartment, with the control unit (12) triggering the operation of the ozone generator (9) following receipt of the activation command and after checking that the safety conditions have actually been met.

5. Vehicle according to claim 4, **characterised in that** the control unit (12) interrupts the operation of the ozone generator (9) when the safety conditions have not been met.

6. Vehicle according to any one of the preceding claims, **characterised in that** it comprises a means of communication (24) with a remote server, the control unit (12) issuing via the means of communication an identifier of the vehicle and an item of data indicating that the ozone generator is operational in the vehicle identified.

7. Vehicle according to any one of the preceding claims, **characterised in that** it comprises a means of communication (24) with a remote server, the control unit (12) receiving via the means of communication the parameters defining at least the periods of operation of the cooling unit and of the ozone generator.

8. Vehicle according to any one of claims 1 to 5, **characterised in that** the control unit (12) comprises a panel associating the goods to be loaded in the refrigerated compartment and the period of operation of the ozone generator, the user interface (25) allowing selection of a good from among a number of these, with the control unit selecting the period of operation of the ozone generator as a function of the good selected.

9. Method for conditioning a refrigerated compartment (5) onboard a vehicle (1) and provided with a heat exchanger thermally connected to a cooling unit (6), said vehicle comprising a user interface intended to receive an activation command and transmit it to a control unit (12) to bring said cooling unit into operation, **characterised in that** it comprises a step of receiving the activation command triggering first an operating step (3.2) for a first particular duration of an ozone generator (9) onboard said vehicle and then an operating step (3.5) of the cooling unit for a second particular duration, said vehicle further comprising a means for defrosting (22) the heat exchanger, the operation of which is also controlled by the control unit (12), following the introduction of an activation command, the control unit first starting said defrosting means, then the ozone generator and finally the cooling unit.

10. Method for conditioning a refrigerated compartment according to claim 9, **characterised in that** it comprises an intermediate step (3.3) of a third particular duration taking place between the steps of operation of the ozone generator and operation of the cooling unit, a fan (8) positioned in the compartment being in operation and the ozone generator as well as the cooling unit being at a standstill during said intermediate step.
